# EUROPEAN PATENT APPLICATION

(11) **EP 4 556 882 A1**
(43) Date of publication of application: **21.05.2025**
(21) Application number: 23859818.9
(22) Date of filing: 27.06.2023
(51) Int. Cl.: G01M 99/00, F28F 9/00, F28F 27/00

(54) **HEAT EXCHANGER ANALYSIS DEVICE AND HEAT EXCHANGER ANALYSIS METHOD**

(30) Priority: 31.08.2022 JP 2022138366
(71) Applicant: Mitsubishi Heavy Industries, Ltd., Tokyo 100-8332 (JP)
(72) Inventor: NAKANO, Shinya, Tokyo 100-8332 (JP); KIZU, Tetsuya, Tokyo 100-8332 (JP); YUZURIHA, Yojiro, Tokyo 100-8332 (JP); OOTA, Nobuyuki, Yokohama-shi, Kanagawa 231-8715 (JP); SAKASHITA, Gen, Tokyo 100-8332 (JP); KATAFUCHI, Hiroki, Tokyo 100-8332 (JP); KAMEYAMA, Tatsuya, Tokyo 100-8332 (JP); KUBO, Hiroyoshi, Tokyo 100-8332 (JP)
(74) Representative: Müller Schupfner & Partner Patent- und Rechtsanwaltspartnerschaft mbB (Muc)
(86) International application number: PCT/JP2023/023836
(87) International publication number: WO 2024/048048

(57) **Abstract**

This heat exchanger analysis device includes a chronological change acquisition unit, a temperature fluctuation region identification unit, a fluctuation frequency calculation unit, and a fatigue determination unit. The chronological change acquisition unit acquires the chronological change of a metal temperature measured at a measurement point provided to a heat exchanger. The temperature fluctuation region identification unit identifies, from the chronological change, a plurality of temperature fluctuation regions that have a temperature fluctuation range. The fluctuation frequency calculation unit calculates a fluctuation frequency of the metal temperature in a predetermined period on the basis of the plurality of temperature fluctuation regions. The fatigue determination unit determines, on the basis of the fluctuation frequency, whether a heat exchanging part at the measurement point is fatigued.

## Description

### Technical Field

The present disclosure relates to a heat exchanger analysis device and a heat exchanger analysis method.

The present application claims priority based on Japanese Patent Application No. 2022-138366 filed in Japan on August 31, 2022, the contents of which are incorporated herein by reference.

### Background Art

A heat exchanger for performing heat exchange between heat media is known (for example, a gasifier provided in an integrated coal gasification combined cycle power generation plant includes a heat exchanger for performing heat exchange between a coal fuel and a heat medium in order to gasify the coal fuel). Performance of this type of heat exchanger can be analyzed based on a metal temperature of a portion where heat exchange is performed. For example, in PTL 1, performance of the heat exchanger is analyzed by calculating a heat absorption amount based on data acquired by a temperature sensor installed in the heat exchanger. In this document, in particular, it is described that the heat exchanger is divided into a plurality of blocks, and the heat absorption amount in each block can be obtained based on the data detected by the temperature sensor installed in each block. As a result, an abnormality can be detected at a slight stage even in a heat exchanger having a relatively large and complicated configuration.

### Citation List

### Patent Literature

[PTL 1] Japanese Patent No. 6840026

### Summary of Invention

### Technical Problem

In the above-described PTL 1, a metal temperature is measured by a temperature sensor installed in a heat exchanger, and in a case where the metal temperature indicates a value lower than a representative temperature of a heat medium passing through the heat exchanger, it is determined that there is an abnormality, for example, such as a decrease in thermal conductivity due to growth of an attachment to a heat transfer pipe of the heat exchanger. Here, according to studies by the present inventors, it has been found that in this type of heat exchanger, in a case where the metal temperature chronologically changes, a thermal load is generated in the heat exchanger according to temperature fluctuation, which causes fatigue. Since the fatigue caused by such a thermal load is related to the fluctuation of the metal temperature, it is difficult to analyze the fatigue based on high and low of the metal temperature as in PTL 1 (for example, in a temperature change including a big spike that is a temperature fluctuation indicating a repeated rapid peak in temperature fluctuation or a large peak, an influence of the fatigue caused by the thermal load related to the fluctuation of the metal temperature is large).

At least one embodiment of the present disclosure has been made in view of the above circumstances, and an object of the present disclosure is to provide a heat exchanger analysis device and a heat exchanger analysis method capable of suitably analyzing an influence of a thermal load caused by a fluctuation in a metal temperature. Solution to Problem

In order to solve the above-described problem, a heat exchanger analysis device according to at least one embodiment of the present disclosure includes
a chronological change acquisition unit for acquiring a chronological change of a metal temperature measured over a predetermined period at at least one measurement point provided in a heat exchanger for performing heat exchange between heat media,
a temperature fluctuation region identification unit for identifying a plurality of temperature fluctuation regions having a temperature fluctuation width from the chronological change,
a fluctuation frequency calculation unit for calculating a fluctuation frequency of the metal temperature in the predetermined period based on the plurality of temperature fluctuation regions, and
a fatigue determination unit for determining presence or absence of fatigue in the heat exchange unit at the at least one measurement point based on the fluctuation frequency.

In order to solve the above-described problem, a heat exchanger analysis method according to at least one embodiment of the present disclosure includes
a step of acquiring a chronological change of a metal temperature measured over a predetermined period at at least one measurement point provided in a heat exchanger for performing heat exchange between heat media,
a step of identifying a plurality of temperature fluctuation regions having a temperature fluctuation width from the chronological change,
a step of calculating a fluctuation frequency of the metal temperature in the predetermined period based on the plurality of temperature fluctuation regions, and
a step of determining presence or absence of fatigue in the heat exchange unit at the at least one measurement point based on the fluctuation frequency. Advantageous Effects of Invention

According to at least one embodiment of the present disclosure, it is possible to provide a heat exchanger analysis device and a heat exchanger analysis method capable of suitably analyzing an influence of a thermal load caused by a fluctuation in a metal temperature.

### Brief Description of Drawings

Fig. 1 is a schematic diagram of a heat exchanger according to an embodiment.
Fig. 2 is a configuration diagram showing a heat exchanger analysis device according to an embodiment.
Fig. 3 is a flowchart showing a heat exchanger analysis method according to an embodiment.
Fig. 4 is an example of a chronological change of a metal temperature acquired in step S100 of Fig. 3.
Fig. 5 is a diagram showing a plurality of temperature fluctuation regions identified in step S101 of Fig. 3.
Fig. 6 is a diagram showing an example in which the plurality of temperature fluctuation regions are classified into a plurality of groups in step S102.
Fig. 7 is an aggregation example of classification results of Fig. 6.
Fig. 8 is a display example of a display unit in step S106 of Fig. 3.

### Description of Embodiments

Hereinafter, some embodiments of the present invention will be described with reference to the accompanying drawings. Meanwhile, configurations described in the embodiments or shown in the drawings are not intended to limit the scope of the invention, and are merely examples for description.

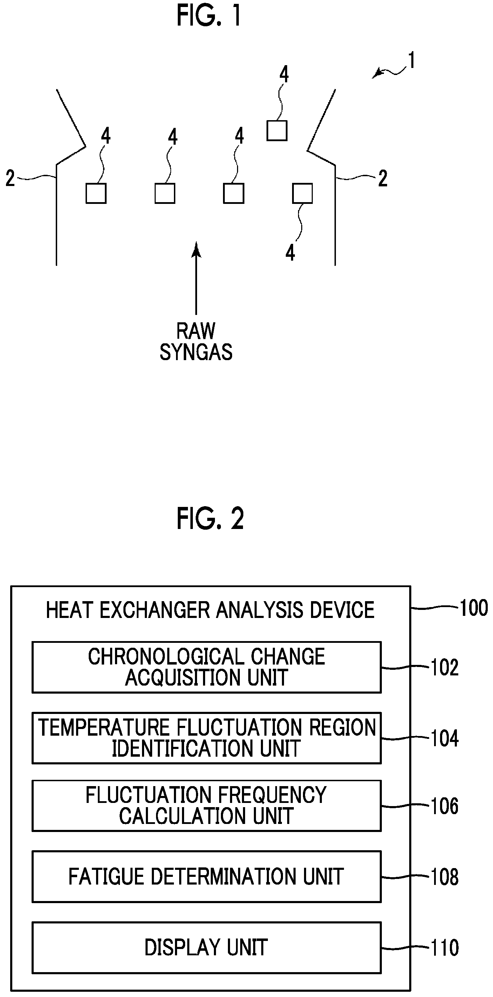

First, a heat exchanger 1, which is an analysis target of a heat exchanger analysis device according to at least one embodiment of the present disclosure, will be described. Fig. 1 is a schematic diagram of the heat exchanger 1 according to an embodiment.

The heat exchanger 1 is a device for performing heat exchange between heat media. In the present embodiment, as an example of the heat exchanger 1, a syngas cooler (SGC) heat exchanger that generates steam for driving a steam turbine by performing heat exchange with high-temperature raw syngas (for example, coal-containing fuel) generated in a gasifier provided in an integrated coal gasification combined cycle (IGCC) power plant is described, but the present invention is not limited thereto.

In a gasifier (not shown) in the integrated coal gasification combined cycle power generation plant, pulverized coal generated by pulverizing a coal fuel is burned together with air. As a result, high-temperature raw syngas is generated by a gasification reaction. The raw syngas is sent to the heat exchanger 1 as a heat medium and performs heat exchange with cooling water that is another thermal refrigerant, through a heat transfer wall 2 formed of a metallic material having thermal conductivity. The cooling water is converted into steam by an amount of heat received from the raw syngas and is sent to a steam turbine (not shown).

At least one measurement point 4 for measuring a temperature of the heat transfer wall 2 (hereinafter, appropriately referred to as a "metal temperature T") is provided on the heat transfer wall 2 of the heat exchanger 1. For example, a temperature sensor such as a thermocouple is installed at the measurement point 4. In the present embodiment, a plurality of measurement points 4 are installed at different positions on the heat transfer wall 2. At each of the plurality of measurement points 4, the metal temperature T is detected by the temperature sensor, and the metal temperature T is used for calculation by a heat exchanger analysis device described below.

Next, a heat exchanger analysis device 100 for analyzing the heat exchanger 1 having the above-described configuration will be described. Fig. 2 is a configuration diagram showing the heat exchanger analysis device 100 according to an embodiment.

The heat exchanger analysis device 100 is configured to include, for example, a central processing unit (CPU), a random access memory (RAM), a read only memory (ROM), and a computer-readable storage medium. A series of processing for realizing various functions is stored in a storage medium or the like in the form of a program, as an example, and the CPU reads out this program to a RAM or the like, and executes processing for information processing and calculation, whereby various functions are realized. A form installed in advance in the ROM or other storage medium, a form provided in a state of being stored in a computer-readable storage medium, or a form of being delivered via wired or wireless communication means may be applied as the program. The computer-readable storage medium is a magnetic disk, a magneto-optical disk, a CD-ROM, a DVD-ROM, a semiconductor memory, or the like.

The heat exchanger analysis device 100 in which various functions are realized by executing such a program includes, as functional configurations, a chronological change acquisition unit 102, a temperature fluctuation region identification unit 104, a fluctuation frequency calculation unit 106, a fatigue determination unit 108, and a display unit 110.

In the following description, a case where in the configuration of the heat exchanger analysis device 100, analysis of the heat exchanger 1 at the measurement point 4 is performed based on the metal temperature T detected by the temperature sensor installed at one measurement point 4 will be shown as an example. As shown in Fig. 1, in a case where the plurality of measurement points 4 are provided in the heat exchanger 1, in the configuration of the heat exchanger analysis device 100, the analysis of the heat exchanger 1 at each measurement point 4 is performed by performing the same processing for each measurement point 4 unless otherwise specified.

The chronological change acquisition unit 102 is configured to acquire a chronological change of the metal temperature T measured at the measurement point 4 over a predetermined period. The chronological change acquisition unit 102 temporally continuously acquires the chronological change of the metal temperature T in the predetermined period by acquiring a detection value of the temperature sensor installed at the measurement point 4.

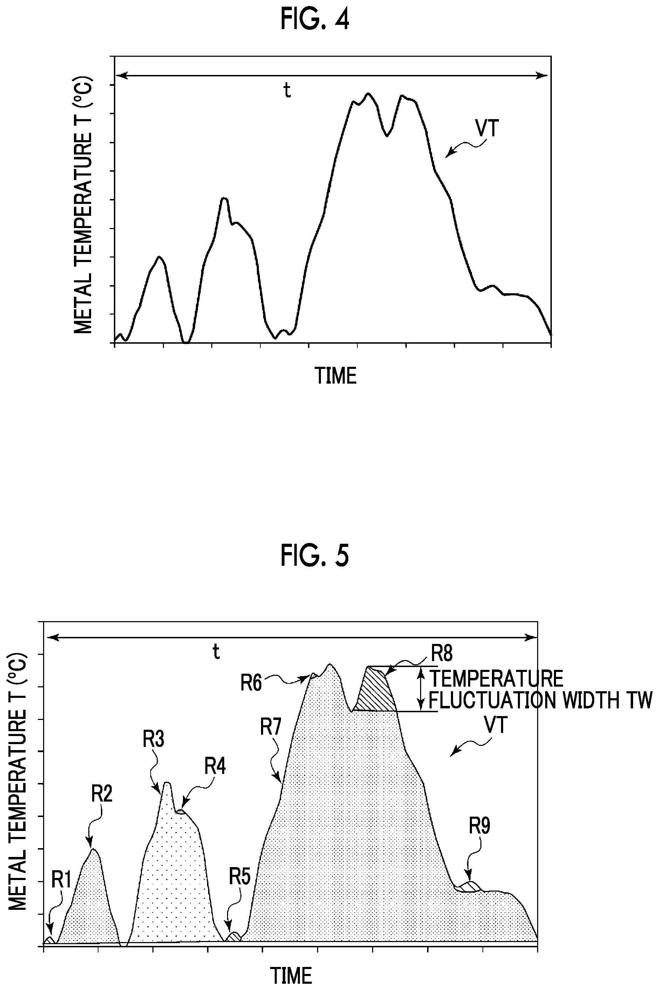

Details of the chronological change of the specific metal temperature T will be described later with reference to Fig. 4.

The temperature fluctuation region identification unit 104 is configured to identify the temperature fluctuation region from the chronological change of the metal temperature T. In general, the metal temperature T changes from time to time as time elapses. The temperature fluctuation region identification unit 104 identifies a range having a predetermined temperature fluctuation width as the temperature fluctuation region from the chronological change of the metal temperature T.

In addition, since the chronological change of the metal temperature T includes behavior having various temperature fluctuation widths, the temperature fluctuation region identification unit 104 may identify a range having a temperature fluctuation width equal to or greater than a certain reference value as the temperature fluctuation region. As a result, a small temperature change having a temperature fluctuation width less than the reference value is ignored because influence on fatigue analysis of the heat exchanger 1 is small, and a fatigue determination of the heat exchanger can be suitably performed based on a temperature change having a large influence on the fatigue analysis of the heat exchanger 1.

Details of the identification of the temperature fluctuation region by the temperature fluctuation region identification unit 104 will be described later with reference to Fig. 5.

The fluctuation frequency calculation unit 106 is configured to calculate the fluctuation frequency of the metal temperature T in the predetermined period based on the plurality of temperature fluctuation regions identified by the temperature fluctuation region identification unit 104. The fluctuation frequency is calculated, for example, based on how many temperature fluctuation regions identified by the temperature fluctuation region identification unit 104 are included in the predetermined period corresponding to the chronological change of the metal temperature T acquired by the chronological change acquisition unit 102.

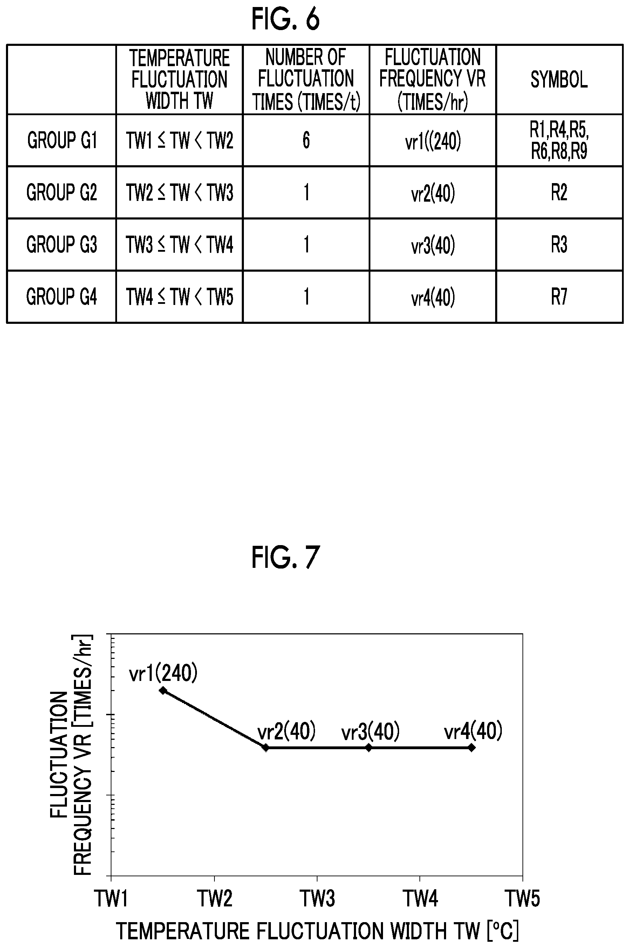

Details of the calculation of the fluctuation frequency by the fluctuation frequency calculation unit 106 will be described later with reference to Figs. 6 and 7.

The fatigue determination unit 108 is configured to determine presence or absence of the fatigue at the measurement point 4 based on the fluctuation frequency calculated by the fluctuation frequency calculation unit 106. The fluctuation frequency means a frequency at which the metal temperature T fluctuates in the predetermined period, and has a correlation with the fatigue applied to the heat exchanger due to a thermal load. The fatigue determination unit 108 determines the presence or absence of the fatigue by analyzing a fatigue degree corresponding to the fluctuation frequency calculated by the fluctuation frequency calculation unit 106 based on such a correlation.

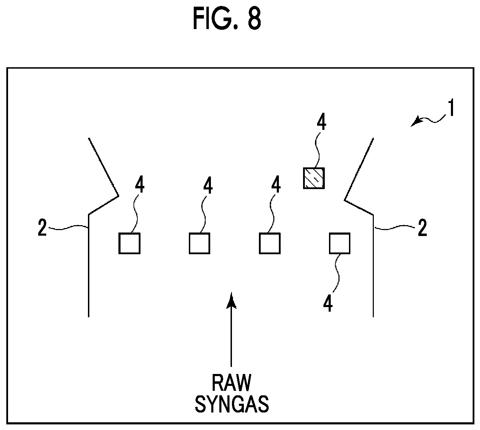

The display unit 110 is configured to display various types of information handled by the heat exchanger analysis device 100. The various types of information displayed on the display unit 110 may include, for example, a determination result by the fatigue determination unit 108. In this case, as shown in Fig. 1, in a case where the plurality of measurement points 4 are provided, an analysis result for each measurement point 4 may be displayed, a comprehensive analysis result for the entire heat exchanger 1 obtained from analysis results of the plurality of measurement points 4 may be displayed, or a fatigue distribution based on the analysis result at each measurement point 4 of the heat exchanger 1 may be displayed as described later with reference to Fig. 8.

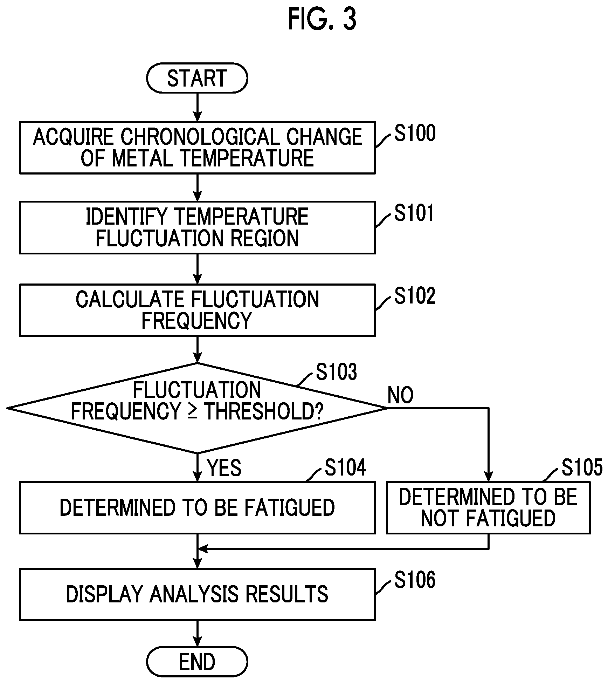

Next, a heat exchanger analysis method performed by the heat exchanger analysis device 100 having the above-described configuration will be described. Fig. 3 is a flowchart showing a heat exchanger analysis method according to an embodiment.

First, the chronological change acquisition unit 102 acquires a chronological change VT of the metal temperature T measured at the at least one measurement point 4 provided in the heat exchanger 1 over a predetermined period t (step S100). In step S100, the chronological change acquisition unit 102 may sequentially acquire the metal temperature T detected by the temperature sensor installed at the measurement point 4 in real time for the predetermined period t. In addition, in step S100, the metal temperature T acquired by the temperature sensor over the predetermined period in the past may be stored in a storage device (not shown) together with time, and the chronological change VT of the metal temperature T may be acquired by reading out the metal temperature T over the predetermined period from the storage device.

Fig. 4 is an example of the chronological change VT of the metal temperature T acquired in step S100 of Fig. 3. In this example, the chronological change of the metal temperature T detected by the temperature sensor installed at a certain measurement point 4 is shown over the preset predetermined period t. The metal temperature T changes from time to time and has a predetermined waveform with respect to a time axis by repeating an increase or a decrease.

Next, the temperature fluctuation region identification unit 104 identifies a plurality of temperature fluctuation regions R from the chronological change VT acquired in step S100 (step S101). The temperature fluctuation region R is identified as a range in which a temperature changes to have a predetermined temperature change width in the chronological change VT of the metal temperature T. As described above, the temperature fluctuation region identification unit 104 may identify a range in which the temperature changes by a temperature change width equal to or larger than a preset reference value as the temperature fluctuation region R.

Here, Fig. 5 is a diagram showing a plurality of temperature fluctuation regions R1, R2, ... identified in step S101 of Fig. 3. In Fig. 5, the plurality of temperature fluctuation regions R1, R2, ... identified by the temperature fluctuation region identification unit 104 are shown to be distinguishable from each other by different hatching. In this example, the plurality of temperature fluctuation regions R1, R2, ... are identified by applying rain flow analysis to the chronological change VT of the metal temperature T shown in Fig. 4. As described above, in step S101, by applying the rain flow analysis, the plurality of temperature fluctuation regions R1, R2, ... are suitably identified from the chronological change VT of the metal temperature T.

In Fig. 5, a case where the temperature fluctuation region R is identified by applying the rain flow analysis is shown as an example. The rain flow analysis is one of methods used for fatigue life analysis that is subjected to irregular repetitive fluctuations, and instead thereof, for example, another method such as a range pair counting method may be applied.

Next, the fluctuation frequency calculation unit 106 calculates a fluctuation frequency VR of the metal temperature T in the predetermined period t based on the plurality of temperature fluctuation regions R1, R2, ... identified in step S101 (step S102). For example, the calculation of the fluctuation frequency VR in step S102 may be performed by classifying the plurality of temperature fluctuation regions R1, R2, ... into a plurality of groups G1, G2, ... set based on magnitude of a temperature fluctuation width TW and the calculation of the fluctuation frequency VR may be performed based on a sum of the fluctuation frequencies vr of the temperature fluctuation regions R belonging to each of the plurality of groups G1, G2, .... Fig. 6 is a diagram showing an example in which the plurality of temperature fluctuation regions R1, R2, ... are classified into the plurality of groups G1, G2, ... in step S102, and Fig. 7 is an aggregation example of classification results in Fig. 6.

In Fig. 6, the plurality of groups G1, G2, ... are defined based on the magnitude of the temperature fluctuation width TW. The group G1 is a group in which the temperature fluctuation region R where the temperature fluctuation width TW satisfies TW1 ≤ TW < TW2 is classified, the group G2 is a group in which the temperature fluctuation region R where the temperature fluctuation width TW satisfies TW2 ≤ TW < TW3 is classified, the group G3 is a group in which the temperature fluctuation region R where the temperature fluctuation width TW satisfies TW3 ≤ TW < TW4 is classified, and the group G4 is a group in which the temperature fluctuation region R where the temperature fluctuation width TW satisfies TW4 ≤ TW < TW5 is classified (TW1 < TW2 < TW3 < TW4 < TW5 is satisfied, and for example, TW1 = 0 (°C), TW2 = 12 (°C), TW3 = 24 (°C), TW4 = 36 (°C), and TW5 = 48 (°C) is satisfied).

In Fig. 6, a case where the number of groups for classifying the plurality of temperature fluctuation regions R1, R2, ... is four is shown as an example, but the number of classifications is not limited thereto. For example, an accuracy of a thermal load calculation can be improved by increasing the number of classifications.

Among the plurality of temperature fluctuation regions R1, R2, ..., which are identified in step S101, temperature fluctuation regions R1, R4, R5, R6, R8, and R9 having similar temperature fluctuation widths TW are classified into the group G1. Next, the temperature fluctuation region R2 having the following largest temperature fluctuation width TW is classified into the group G2. Next, the temperature fluctuation region R3 having the following largest temperature fluctuation width TW is classified into the group G3. Next, the temperature fluctuation region R7 having the following largest temperature fluctuation width TW is classified into the group G4. In this case, the fluctuation frequency calculation unit 106 converts the number of fluctuation times "6", which is the number of classifications of the group G1 at the predetermined time t (= 1.5 minutes), into a unit time (= 1 hour) to calculate a fluctuation frequency vr1 (= 240) corresponding to the group G1. Similarly, the fluctuation frequency calculation unit 106 converts the number of fluctuation times "1", which is the number of classifications of the group G2 at the predetermined time t (= 1.5 minutes), into a unit time (= 1 hour) to calculate a fluctuation frequency vr2 (= 40) corresponding to the group G2. Similarly, the fluctuation frequency calculation unit 106 converts the number of fluctuation times "1", which is the number of classifications of the group G3 at the predetermined time t (= 1.5 minutes), into a unit time (= 1 hour) to calculate a fluctuation frequency vr3 (= 40) corresponding to the group G3. Similarly, the fluctuation frequency calculation unit 106 converts the number of fluctuation times "1", which is the number of classifications of the group G4 at the predetermined time t (= 1.5 minutes), into a unit time (= 1 hour) to calculate a fluctuation frequency vr4 (= 40) corresponding to the group G4. Then, the fluctuation frequency calculation unit 106 calculates the fluctuation frequency VR (= 360) at the predetermined time t as a sum of the fluctuation frequencies vr1, vr2, ... of each the groups G1, G2, ....

In addition, in a case where the fluctuation frequency calculation unit 106 calculates the fluctuation frequency VR as the sum of the fluctuation frequencies vr of each group in step S102, a weighting coefficient set based on the temperature fluctuation width TW corresponding to each group may be used. As a result, an influence of the magnitude of the temperature fluctuation width TW on the fatigue is reflected in the fluctuation frequency VR based on the weighting coefficient, and the fatigue analysis can be more suitably performed.

In this case, the weighting coefficient may be set to be larger as the temperature fluctuation width TW corresponding to each group is larger. In the present embodiment, since the temperature fluctuation width TW increases in the order of the groups G1, G2, ..., weighting coefficients corresponding to the fluctuation frequencies vr1, vr2, ... are set to increase in order. According to studies by the present inventors, it has been found that as the magnitude of the temperature fluctuation width TW increases, the fatigue that the temperature fluctuation region R brings to the heat exchanger 1 tends to increase. Therefore, the weighting coefficient used in a case of calculating the fluctuation frequency VR is set to be larger as the temperature fluctuation width TW is larger, so that the fatigue analysis in which the influence of such a temperature fluctuation width TW on the fatigue is suitably considered can be performed.

Next, returning to Fig. 3, the fatigue determination unit 108 determines the presence or absence of the fatigue at the measurement point 4 based on the fluctuation frequency VR calculated in step S103 (step S103). In step S103, the presence or absence of the fatigue is determined based on whether or not the fluctuation frequency VR calculated as described above is equal to or higher than a preset threshold value VR0. Specifically, in a case where the fluctuation frequency VR is equal to or higher than the threshold value VR0 (YES in step S103), presence of the fatigue is determined (step S104). On the other hand, in a case where the fluctuation frequency VR is less than the threshold value VR0 (NO in step S103), absence of the fatigue is determined (step S105).

In step S103, the fatigue determination unit 108 may perform the determination of the presence of the fatigue in a case where the fluctuation frequency VR calculated in step S102 is integrated for each predetermined period t, so that the integration result is equal to or higher than the preset threshold value VR0. Accordingly, in a case where the thermal load is accumulated in the heat exchanger 1 in excess of a predetermined amount as time elapses, the presence of the fatigue is determined, and thus fatigue monitoring of the heat exchanger can be performed.

Next, the display unit 110 displays an analysis result of the fatigue determination unit 108 (step S106). The display of the analysis result in step S106 is performed in an aspect in which an operator, for example, as a display, can perform recognition. As one of display examples of the analysis result, in a case where the metal temperature T is measured at the plurality of measurement points 4 as shown in Fig. 1, the display is performed in an aspect in which the presence or absence of the fatigue at each measurement point 4 is distinguishable.

Here, Fig. 8 is a display example of the display unit 110 in step S106 of Fig. 3. In Fig. 8, the heat exchanger 1 shown in Fig. 1 is schematically displayed together with the plurality of measurement points 4. The metal temperature T detected at each measurement point 4 is used for fatigue determination at each measurement point 4 by the above-described calculation processing. In this display example, based on the fatigue determination result at each measurement point 4, the measurement point 4 in which the presence of the fatigue is determined is highlighted to be displayed as compared to the measurement point 4 in which the absence of the fatigue is determined, so that the measurement points 4 can be distinguished from each other. Accordingly, the operator with reference to the present display can easily understand where the fatigue is progressing among the plurality of measurement points 4 provided in the heat exchanger 1.

As described above, according to each of the above-described embodiments, the fluctuation frequency VR of the metal temperature T in the predetermined period t is calculated by identifying the temperature fluctuation region R in which the temperature fluctuation occurs from the chronological change of the metal temperature T at the measurement point 4 provided in the heat exchanger 1. Since the fluctuation of the metal temperature T is a factor that applies a thermal load to the heat exchanger 1, the presence or absence of the fatigue received by the heat exchanger 1 due to the thermal load can be suitably analyzed based on the fluctuation frequency VR of the metal temperature T calculated in this way.

In addition, it is possible to appropriately replace the components in the embodiment described above with well-known components within the scope which does not depart from the concept of the present disclosure, and the embodiments described above may be appropriately combined with each other.

For example, contents described in each of the above-described embodiments are understood as follows.
(1) A heat exchanger analysis device according to one aspect includes
   a chronological change acquisition unit for acquiring a chronological change of a metal temperature measured over a predetermined period at at least one measurement point provided in a heat exchanger for performing heat exchange between heat media,
   a temperature fluctuation region identification unit for identifying a plurality of temperature fluctuation regions having a temperature fluctuation width from the chronological change,
   a fluctuation frequency calculation unit for calculating a fluctuation frequency of the metal temperature in the predetermined period based on the plurality of temperature fluctuation regions, and
   a fatigue determination unit for determining presence or absence of fatigue in the heat exchange unit at the at least one measurement point based on the fluctuation frequency.

According to the above-described aspect (1), the fluctuation frequency in the metal temperature in the predetermined period is calculated by identifying the temperature fluctuation region in which the temperature fluctuation occurs, from the chronological change of the metal temperature at the measurement point provided in the heat exchanger. Since the fluctuation of the metal temperature is a factor that applies a thermal load to the heat exchanger, the presence or absence of fatigue received by the heat exchanger due to the thermal load can be suitably analyzed based on the fluctuation frequency of the metal temperature calculated in this way.

(2) In another aspect, in the above-described aspect (1),
the fluctuation frequency calculation unit classifies the plurality of temperature fluctuation regions into a plurality of groups set based on magnitude of the temperature fluctuation width, and calculates the fluctuation frequency based on a sum of the number of the temperature fluctuation regions belonging to each of the plurality of groups.

According to the above-described aspect (2), the plurality of temperature fluctuation regions included in the chronological change of the metal temperature are classified into the plurality of groups set based on the magnitude of the temperature fluctuation width. The number of temperature fluctuation regions classified into each group is aggregated for each group, and the sum thereof is obtained, whereby the fluctuation frequency for determining the presence or absence of fatigue can be suitably calculated.

(3) In another aspect, in the above-described aspect (2),
the fluctuation frequency calculation unit calculates the sum by multiplying the number of the temperature fluctuation regions belonging to the plurality of groups by a weighting coefficient set based on the magnitude of the temperature fluctuation width.

According to the above-described aspect (3), in a case of obtaining the sum for calculating the fluctuation frequency, the number of each temperature fluctuation region is multiplied by the weighting coefficient set based on the magnitude of the temperature fluctuation width. As a result, an influence of the magnitude of the temperature fluctuation width on the fatigue is reflected in the fluctuation frequency based on the weighting coefficient, and the fatigue analysis can be more suitably performed.

(4) In another aspect, in the above-described aspect (3),
the weighting coefficient is set to be larger as the temperature fluctuation width corresponding to the group is larger.

According to studies by the present inventors, it has been found that as the magnitude of the temperature fluctuation width increases, the fatigue that the temperature fluctuation region brings to the heat exchanger tends to increase. According to the above-described aspect (4), the weighting coefficient used in a case of calculating the fluctuation frequency is set to be larger as the temperature fluctuation width is larger, so that the fatigue analysis in which the influence of such a temperature fluctuation width on the fatigue is suitably considered can be performed.

(5) In another aspect, in any one of the above-described aspects (1) to (4),
the fatigue determination unit integrates the fluctuation frequency for each predetermined period, and determines that the fatigue is present in a case where an integration result exceeds a preset threshold value.

According to the above-described aspect (5), the fluctuation frequency calculated based on the temperature fluctuation region identified from the chronological change of the metal temperature is integrated for each predetermined period. In a case where an integration result exceeds the threshold value, it is determined that the heat exchanger is fatigued. In this way, the fatigue accumulated in the heat exchanger according to elapse of time can be suitably analyzed.

(6) In another aspect, in any one of the above-described aspects (1) to (5),
the temperature fluctuation region identification unit identifies the plurality of temperature fluctuation regions by performing rain flow analysis on the chronological change.

According to the above-described aspect (6), the plurality of temperature fluctuation regions can be suitably identified from the chronological change of the metal temperature by using rain flow analysis. Instead of the rain flow analysis, another method such as a range pair counting method may be adopted.

(7) In another aspect, in any one of the above-described aspects (1) to (6),
the at least one measurement point includes a plurality of measurement points provided at different positions of the heat exchanger.

According to the above-described aspect (7), the chronological change of the metal temperature is acquired at the plurality of measurement points provided at different positions of the heat exchanger. The chronological change of the metal temperature acquired at each measurement point is handled respectively as described above, and the fatigue at each measurement point is analyzed. Accordingly, a distribution state of the fatigue at a plurality of positions of the heat exchanger can be suitably analyzed.

(8) In another aspect, in the above-described aspect (7), there is further provided
a display unit for displaying an analysis result in the fatigue determination unit for the plurality of measurement points in an aspect in which the presence or absence of the fatigue is distinguishable.

According to the above-described aspect (8), the analysis result obtained at the plurality of measurement points is displayed in an aspect in which the presence or absence of fatigue is distinguishable, so that it is possible to suitably understand a fatigue state of the heat exchanger.

(9) In another aspect, in any one of the above-described aspects (1) to (8),
the heat exchanger has a configuration for exchanging a coal fuel with the heat medium in a gasifier provided in an integrated coal gasification combined cycle power generation plant.

According to the above-described aspect (9), the fatigue state in the gasifier provided in the integrated coal gasification combined cycle power generation plant can be suitably analyzed.

(10) A heat exchanger analysis method according to one aspect includes
a step of acquiring a chronological change of a metal temperature measured over a predetermined period at at least one measurement point provided in a heat exchanger for performing heat exchange between heat media,
a step of identifying a plurality of temperature fluctuation regions having a temperature fluctuation width from the chronological change,
a step of calculating a fluctuation frequency of the metal temperature in the predetermined period based on the plurality of temperature fluctuation regions, and
a step of determining presence or absence of fatigue in the heat exchange unit at the at least one measurement point based on the fluctuation frequency.

According to the above-described aspect (10), the fluctuation frequency in the metal temperature in the predetermined period is calculated by identifying the temperature fluctuation region in which the temperature fluctuation occurs, from the chronological change of the metal temperature at the measurement point provided in the heat exchanger. Since the fluctuation of the metal temperature is a factor that applies a thermal load to the heat exchanger, the presence or absence of fatigue received by the heat exchanger due to the thermal load can be suitably analyzed based on the fluctuation frequency of the metal temperature calculated in this way.

### Reference Signs List

1: heat exchanger
2: heat transfer wall
4: measurement point
100: heat exchanger analysis device
102: chronological change acquisition unit
104: temperature fluctuation region identification unit
106: fluctuation frequency calculation unit
108: fatigue determination unit
110: display unit

## Claims

1. A heat exchanger analysis device comprising:
a chronological change acquisition unit for acquiring a chronological change of a metal temperature measured over a predetermined period at at least one measurement point provided in a heat exchanger for performing heat exchange between heat media;
a temperature fluctuation region identification unit for identifying a plurality of temperature fluctuation regions having a temperature fluctuation width from the chronological change;
a fluctuation frequency calculation unit for calculating a fluctuation frequency of the metal temperature in the predetermined period based on the plurality of temperature fluctuation regions; and
a fatigue determination unit for determining presence or absence of fatigue in t he heat exchange unit at the at least one measurement point based on the fluctuation fr equency.

2. The heat exchanger analysis device according to claim 1,
wherein the fluctuation frequency calculation unit classifies the plurality of te mperature fluctuation regions into a plurality of groups set based on magnitude of the t emperature fluctuation width, and calculates the fluctuation frequency based on a sum of the number of the temperature fluctuation regions belonging to each of the plurality of groups.

3. The heat exchanger analysis device according to claim 2,
wherein the fluctuation frequency calculation unit calculates the sum by multi plying the number of the temperature fluctuation regions belonging to the plurality of groups by a weighting coefficient set based on the magnitude of the temperature fluctu ation width.

4. The heat exchanger analysis device according to claim 3,
wherein the weighting coefficient is set to be larger as the temperature fluctuat ion width corresponding to the group is larger.

5. The heat exchanger analysis device according to claim 1 or 2,
wherein the fatigue determination unit integrates the fluctuation frequency for each predetermined period, and determines that the fatigue is present in a case where a n integration result exceeds a preset threshold value.

6. The heat exchanger analysis device according to claim 1 or 2,
wherein the temperature fluctuation region identification unit identifies the plu rality of temperature fluctuation regions by performing rain flow analysis on the chron ological change.

7. The heat exchanger analysis device according to claim 1 or 2,
wherein the at least one measurement point includes a plurality of measuremen t points provided at different positions of the heat exchanger.

8. The heat exchanger analysis device according to claim 7, further comprising:
a display unit for displaying an analysis result in the fatigue determination unit for the plurality of measurement points in an aspect in which the presence or absence of the fatigue is distinguishable.

9. The heat exchanger analysis device according to claim 1 or 2,
wherein the heat exchanger has a configuration for exchanging a coal fuel with the heat medium in a gasifier provided in an integrated coal gasification combined cy cle power generation plant.

10. A heat exchanger analysis method comprising:
a step of acquiring a chronological change of a metal temperature measured over a predetermined period at at least one measurement point provided in a heat exchanger for performing heat exchange between heat media;
a step of identifying a plurality of temperature fluctuation regions having a temperature fluctuation width from the chronological change;
a step of calculating a fluctuation frequency of the metal temperature in the predetermined period based on the plurality of temperature fluctuation regions; and
a step of determining presence or absence of fatigue in the heat exchange unit at the at least one measurement point based on the fluctuation frequency.
